# EUROPEAN PATENT SPECIFICATION

(11) **EP 3 147 119 B1**
(45) Date of publication and mention of the grant of the patent: **25.07.2018**
(21) Application number: 15186685.2
(22) Date of filing: 24.09.2015
(51) Int. Cl.: B32B 5/02, B32B 5/14, B32B 5/26, B32B 27/12, B32B 27/32, B32B 3/06, B32B 3/08, E04G 5/04

(54) **A WOVEN FABRIC PRODUCT**
WEBSTOFFPRODUKT
PRODUIT D'ÉTOFFE TISSÉE

(43) Date of publication of application: 29.03.2017
(73) Proprietor: Jung Shin Co., Ltd., Seoul 137-867 (KR)
(72) Inventor: BANG, Song-Hyuk, 1452-10, Seochno-Dong, Seoul (KR)
(74) Representative: Berggren Oy, Helsinki & Oulu

(56) References cited:
- GB-A- 2 471 124
- JP-A- 2003 105 975
- US-A- 5 131 434
- US-A1- 2013 323 459

## Description

### TECHNICAL FIELD

The invention concerns in general the technology of construction site scaffold coverings, such as weather and fall down protecting coverings to be mounted on scaffolds and like. In particular the invention concerns the structure of the protective covering to ensure long lasting and reliable product and also reliable and easy operation when installing the covering.

More specifically the invention concerns a woven fabric product comprising
- a sheet layer wherein a plurality of strip formed weft elements and warp elements are woven together to form a sheet fabric,
- a reinforcement layer that is a woven band comprising openings for fastening the product when in use,
- the reinforcement layer is laminated on at least one side of the sheet layer,
- a film layer laminated on the sheet layer. In publication US 2013/323459 A1 is disclosed an edge overlay for layered isolative blanket of this type. In publication US 5131434 is disclosed an air bag fabric with at least two types of weaves.

### BACKGROUND OF THE INVENTION

Weather and fall down protection is an essential part of construction site safety and to ensure that for example a renovation of an outer surface or a roof of a building can be done under any weather conditions. Especially in long lasting renovations the whole building may be built around with scaffolds covered with protective coverings. The scaffolds are typically of steel or other metal or wood construction and they have mounting positions for protective coverings to be mounted. In prior art solutions there are protective coverings are made of leno woven and laminated plastic fabric, which has reinforced areas for attaching the covering to the scaffolds. As the weather conditions may vary significantly during long lasting construction projects, the coverings need to be durable, tear resistant and long lasting while yet easy to install. Typically there are available different grammages for different purposes, a protective covering for roof purpose is normally heavier, such as 250 to 350 g/m², and a protective covering for wall purpose is lighter, such as 150 to 250 g/m². The strength of the protective covering follows the grammage, so the heavier fabric is also more durable, if the other fabric parameters, such as material, weave, etc., remain the same.

### SUMMARY OF THE INVENTION

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

The objective of the present invention is to offer a more light weight product compared to the currently available protective coverings, but still ensure more strength to the product. As the fastenings of the product in use are the spots where the tear most typically starts, this "hot spot" is of particular interest in this product. It is also an objective of the invention to keep the manufacturing of the product as simple as possible to achieve an affordable product in an economic sense. Also light transmitting but not transparent material is an objective, this feature is to offer safe working conditions but still hinder outsider to see to the construction site.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

According to an embodiment of the invention it is provided a woven fabric product comprising
- a sheet layer wherein a plurality of strip formed weft elements and warp elements are woven together to form a sheet fabric,
- a reinforcement layer that is a woven band comprising openings for fastening the product when in use,
- the reinforcement layer is laminated on at least one side of the sheet layer,
- a film layer laminated on the sheet layer
the sheet fabric comprises at least two different type of weaves,
- a basic weave for a main sheet fabric area having substantially equal number of orthogonally woven weft and warp elements, and
- a relief weave to form a fastening region where the number of warp elements per width unit is reduced when compared to the number of weft elements and the openings at the reinforcement layer are aligned with the relief weave. This product achieves the main objective of the invention, a durable but still light weight fabric, which offers particular strength to the spots where the tear normally begins and yet the product is very easy to install under operation conditions. The openings at the reinforcement layer aligned with relief weave in the fastening region provide an easy spot to be punctured and fastened to a scaffold in use. The puncture of relief weave and the film layer can be easily done for example with a knife and still the puncture does not provide an initial fracture for a tear to start. Thus a structure at the opening is impermeable in the product until the opening has been punctured to fasten the product to the scaffold or like. All other openings, which are not necessary for fastening the product remain non-punctured or unopened.

According to an embodiment of the invention the weft elements in the relief weave are continuous from the basic weave to the relief weave. This feature ensures very easy manufacturing but still creates enough strength to the product so that the tear resistance remains good. In manufacturing sense these weft element does not need to aligned or in register with the openings of the reinforcement layer or band to be laminated on a later phase of the manufacturing process. As the manufacturing of the product is preferably a continuous process of web like material, the longitudinal warps are the decisive factors which need of be aligned in the intended width of the product and the traverse weft elements just be woven in constant manner, practically in every position of the weft element in the weave pattern.

According to another embodiment of the invention a number of warp elements in the relief weave is reduced to a number between 3/10 to 8/10 compared to the number of weft elements. Thus this means that there are missing warp elements in the weave pattern, if compared to a fully woven fabric like the basic weave. The range of the missing warp elements is as specified, thus there may be 3 to 8 warp elements in the space of 10 warp elements in fully woven pattern. According to an embodiment warp elements are woven in fastening regions such that there is a blank space instead of a warp element on 7 out of 10 positions to 2 out of 10 positions. This blank space means here the position where the warp element would be in the fully woven pattern but is now missing or left unwoven. According to an embodiment the number of warp elements in the relief weave is reduced to half, thus there is a blank space next to a warp element, possibly even between each warp element.

Still according to an embodiment one or more blank spaces is/are aligned with the openings of the reinforcement layer. As the reinforcement layer is preferably a relatively narrow band like component of the product, it may comprise for example one or more openings in row. As the openings remain in the same position in relation to the band width of the reinforcement layer, in the manufacturing process these openings and blank spaces are aligned or registered prior to laminating the reinforcement layer on to the top of the fastening region where the relief weave is located.

According to an embodiment the number of blank spaces or blank space patterns correspond with the number of opening rows in weft direction. Thus the rows of openings of the reinforcement layer are designed to match with the blank spaces of relief weave. There may be one or more these blank spaces aligned with the opening, depending on the actual diameter of the openings and also on the actual width of the strip of warp element.

Still according to an embodiment, the sheet fabric comprises one or more relief woven fastening regions, preferable there are relief woven fastening regions on both edge areas of the sheet fabric and optionally one or more relief woven fastening region in the middle area. A pitch of the scaffolds determine partly the positions of the fastening regions at the woven fabric product. Thus the openings need to be on a certain distance in width direction (equals weft direction). The product may for example be about 2 meters in width, then two rows of fastening positions are enough, but if the product is for example 5 meters wide, there may be need for more rows. Also if the product is intended for roofing purposes for snow intensive areas, the need on fastening regions increase significantly. Thus the number of these relief woven fastening regions is kind of open parameter, depending on general conditions the actual product is intended for.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF THE DRAWINGS

Fig. 1 illustrates a general overview of an embodiment of the product,
Fig. 2 illustrates a schematic cross section at the fastening region,
Fig. 3 illustrates an embodiment of the basic weave,
Fig. 4 to 7 illustrates some embodiments of relief weaves,
Fig. 8 to 10 illustrates some embodiments of fabric products.

### DETAILED DESCRIPTION OF EMBODIMENTS OF THE INVENTION

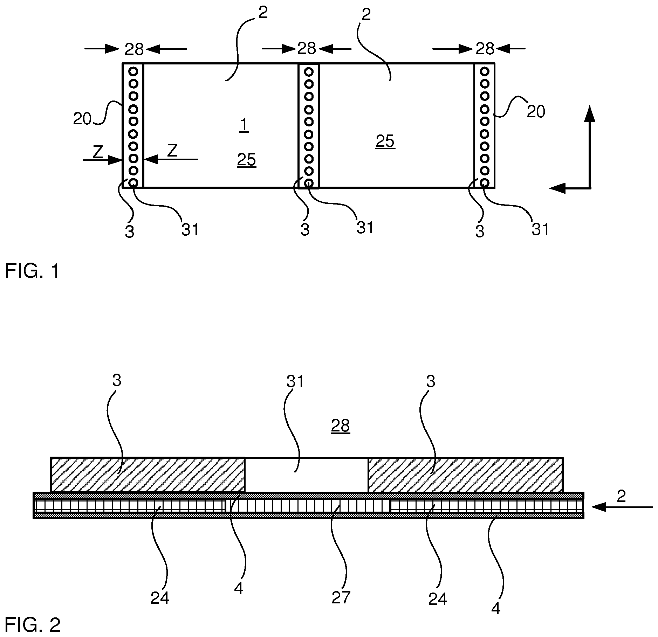

In fig 1 a general overview of an embodiment where woven fabric product 1 comprises
- a sheet layer 2 wherein a plurality of strip formed weft elements and warp elements are woven together to form a sheet fabric (weft elements and warp elements are not shown in Fig. 1),
- a reinforcement layer 3 that is a woven band comprising openings 31 for fastening the product when in use,
- the reinforcement layer 3 is laminated on at least one side of the sheet layer 2. The sheet fabric comprises main sheet fabric area 25 and one or more relief woven fastening regions 28, preferable there are relief woven fastening regions 28 on both edge areas 20 of the sheet fabric and optionally one or more relief woven fastening region in the middle area as shown in the embodiment of fig. 1. The strips used as weft elements and warp elements for weaving the fabric may be for example polypropylene, high density polyethylene, or like.

In fig 2 it is illustrated a schematic cross section of an embodiment of the product at the fastening region, such as along cross section Z-Z shown in fig. 1. The structure of the product can be as following. The sheet layer 2 is in the middle, and the film layer 4 is laminated on both sides of the sheet layer 2. On one side of the sheet layer 2 is attached or laminated the reinforcement layer 3. It is laminated on at least one side of the sheet layer 2, thus the structure can be also two sided so that there are two reinforcement layers, one on both sides of the sheet layer 2. The film layer 4 is preferably extrusion coated and laminated on the sheet layer 2 to form an impermeable structure. The film layer may also be laminated over the reinforcement layer 3. Possible materials for the film layer are among many materials for example LDPE and lamination grade PP. In the reinforcement layer 3 there are openings 31 for fastening the product when in use. Relief weave 27 and basic weave 24 are shown schematically here, as illustrated with different style of hatching in figure 2.

Continuing with fig. 2, preferably the weave of reinforcement layer 3 is different to basic weave 24, preferable the thickness of the reinforcement layer 3 is different to sheet layer 2, preferable the reinforcement layer 3 is thicker than the sheet layer 3. It can be also so, that the weave of reinforcement layer 3 is denser than the basic weave 24 (this is not shown in fig. 2). The openings 31 of reinforcement layer 3 are preferably heat finished to restrain a tear to start from the opening 31 when in use.

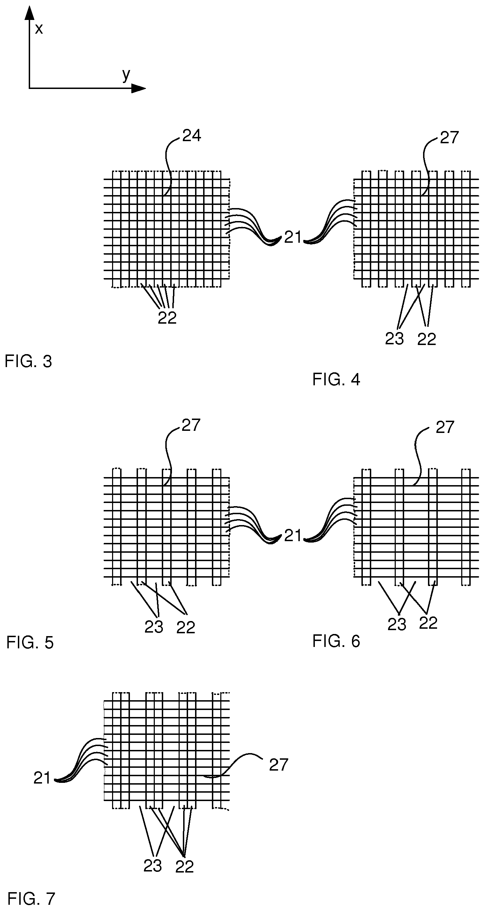

In figures 3 to 7 a warp direction x is vertical and a weft direction y is horizontal. For keeping the figures readable, only a few elements are numbered. In fig. 3 it is illustrated a normal pattern for basic weave 24. It is fabric wherein a plurality of strip formed weft elements 21 and warp elements 22 are woven together to form a sheet fabric. The pattern embodiment shown in fig 3 is fully woven, thus there are weft 21 and warp 22 in each vertical (warp) and horizontal (weft) positions.

In fig. 4 it is illustrated an embodiment of relief weave 27. It is a fabric wherein the number of warp elements 22 in the relief weave 27 is reduced to half, thus there is a blank space 23 next to a warp element 22.

In figures 5 to 7 other embodiments are shown. In general the weft elements 21 in the relief weave are continuous from the basic weave to the relief weave and in these embodiments it is shown so that the weft elements 21 are in all positions, but the number of warp elements 22 may vary and be replaced by a blank space 23. A number of warp elements 22 in the relief weave 27 is reduced to a number between 3/10 to 8/10 compared to the number of weft elements 21. And the other way around, there is a blank space 23 instead of a warp element 22 on 7 out of 10 positions to 2 out of 10 positions. In fig. 5 there are one warp element 22 and two positions of blank spaces 23. In fig. 6 there are one warp element 22 and three positions of blank spaces 23. In fig. 7 there are two warp elements 22 and two blank spaces 23.

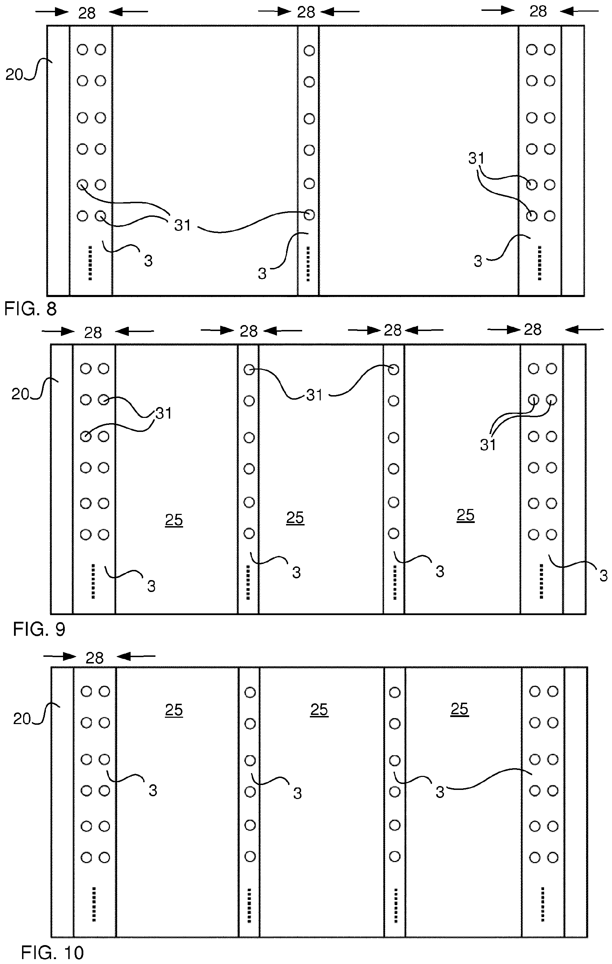

In figures 8 to 10 still some embodiments of the woven fabric product is shown. In the woven fabric product 1 the sheet fabric comprises main sheet fabric area 25 and one or more relief woven fastening regions 28, preferable there are relief woven fastening regions 28 on both edge areas 20 of the sheet fabric and optionally one or more relief woven fastening region 28 in the middle area. In the embodiment of fig. 1 there is one row of openings 31 in the reinforcement layer while figures 8 and 10 shows double row of openings 31 in the edge areas 20 and single row of openings 31 in the middle area. However this is matter of design, there are several possibilities to arrange these rows of openings 31 in the reinforcement layer. The spacing or pitch of the product can be for example the following (from left to right): edge (basic weave) 4.5 cm, reinforcement layer 14 cm, main sheet fabric 78 cm, middle reinforcement layer 7 cm, again main sheet fabric 78 cm, reinforcement layer 14 cm and 4.5 cm edge on the right. Also other dimensions can be used as well, such as 73 cm and 93 cm main sheet fabric area widths as an example.

Variations and modifications to the embodiments described above are possible without departing from the scope of the amended claims. For example, instead of polyester strips, the basic fiber material could be another material suitable for the operating coverings in different temperatures depending on the location of the use of the product.

### REFERENCE SIGNS USED IN FIGURES

- 1: woven fabric product
- 10: edge area
- 15: fastening
- 2: sheet layer
- 20: sheet edge area
- 21: weft element
- 22: warp element
- 23: blank space
- 24: basic weave
- 25: main sheet fabric area
- 27: relief weave
- 28: fastening region
- 3: reinforcement layer
- 4: film layer
- x: warp direction
- y: weft direction

## Claims

1. A woven fabric product (1) comprising
- a sheet layer (2) wherein a plurality of strip formed weft elements (21) and warp elements (22) are woven together to form a sheet fabric,
- a reinforcement layer (3) that is a woven band comprising openings (31) for fastening the product (1) when in use,
- the reinforcement layer (3) is laminated on at least one side of the sheet layer (2),
- at least one film layer (4) laminated on the sheet layer (2) **characterized in that**
the sheet fabric comprises at least two different type of weaves,
- a basic weave (24) for a main sheet fabric area (25) having substantially equal number of orthogonally woven weft elements (21) and warp elements (22), and
- a relief weave (27) to form a fastening region (28) where the number of warp elements (22) per width unit is reduced when compared to the number of weft elements (21),
and that the openings (31) at the reinforcement layer (3) are aligned with the relief weave (27).

2. The woven fabric product (1) of claim 1, **characterized in that** the weft elements (21) in the relief weave (27) are continuous from the basic weave (24) to the relief weave (27).

3. The woven fabric product (1) of claim 1, **characterized in that** a number of warp elements (22) in the relief weave (27) is reduced to a number between 3/10 to 8/10 compared to the number of weft elements (21).

4. The woven fabric product (1) of claim 3, **characterized in that** the number of warp elements (22) in the relief weave (27) is reduced to half, thus there is a blank space (23) next to a warp element (22).

5. The woven fabric product (1) of claim 3, **characterized in that** warp elements (22) are woven in fastening regions (28) such that there is a blank space (23) instead of a warp element (22) on 7 out of 10 positions to 2 out of 10 positions.

6. The woven fabric product (1) of claim 1, **characterized in that** one or more blank spaces (23) is/are aligned with the openings (31) of the reinforcement layer (3).

7. The woven fabric product (1) of claim 1, **characterized in that** the number of blank space (23) patterns correspond with the number of opening (31) rows in weft direction (y).

8. The woven fabric product (1) of claim 1, **characterized in that** the sheet fabric comprises one or more relief woven fastening regions (28), preferable there are relief woven fastening regions (28) on both edge areas (20) of the sheet fabric and optionally one or more relief woven fastening region (28) in the middle area.

9. The woven fabric product (1) of claim 1, **characterized in that** the film layer (4) is laminated on both sides of the sheet layer (2).

10. The woven fabric product (1) of claim 1 or 9, **characterized in that** the film layer (4) is extrusion coated and laminated on the sheet layer (2) to form an impermeable structure.

11. The woven fabric product (1) of claim 1, **characterized in that** the weave of reinforcement layer (3) is different to basic weave (24), preferable the weave of reinforcement layer (3) is denser than the basic weave (24).

12. The woven fabric product (1) of claim 1, **characterized in that** the thickness of the reinforcement layer (3) is different to sheet layer (2), preferable the reinforcement layer (3) is thicker than the sheet layer (2).

13. The woven fabric product (1) of claim 1, **characterized in that** the openings (31) of reinforcement layer (3) are heat finished to restrain a tear to start from the opening (31) when in use.

14. The woven fabric product (1) of claim 1, **characterized in that** a structure at the opening (31) is impermeable.

## Patentansprüche

1. Webstoffprodukt (1) umfassend
- eine Bahnenschicht (2), wobei eine Vielzahl von streifenförmigen Schusselementen (21) und Kettenelementen (22) miteinander verwebt sind, um einen Bahnenstoff zu bilden,
- eine Verstärkungsschicht (3), die ein gewebtes Band ist, das Öffnungen (31) zum Befestigen des Produkts bei Benutzung (1) aufweist,
- wobei die Verstärkungsschicht (3) auf mindestens eine Seite der Bahnenschicht (2) laminiert ist,
- und mindestens eine Folienschicht (4) auf die Bahnenschicht (2) laminiert ist,
**dadurch gekennzeichnet, dass**
der Bahnenstoff mindestens zwei verschiedene Arten von Bindungen aufweist,
- eine Grundbindung (24) für eine Hauptbahnenstofffläche (25), die im Wesentlichen eine gleiche Anzahl von orthogonal gewebten Schusselementen (21) und Kettenelementen (22) aufweist, und
- eine Reliefbindung (27), um einen Befestigungsbereich (28) zu bilden, wo die Anzahl der Kettenelemente (22) pro Breiteneinheit im Vergleich zur Anzahl der Schusselemente (21) reduziert ist,
und dass die Öffnungen (31) an der Verstärkungsschicht (3) auf die Reliefbindung (27) ausgerichtet sind.

2. Webstoffprodukt (1) nach Anspruch 1, **dadurch gekennzeichnet, dass** die Schusselemente (21) in der Reliefbindung (27) von der Grundbindung (24) zur Reliefbindung (27) kontinuierlich sind.

3. Webstoffprodukt (1) nach Anspruch 1, **dadurch gekennzeichnet, dass** eine Anzahl von Kettenelementen (22) in der Reliefbindung (27), verglichen mit der Anzahl von Schusselementen (21), auf eine Zahl zwischen 3/10 und 8/10 reduziert ist.

4. Webstoffprodukt (1) nach Anspruch 3, **dadurch gekennzeichnet, dass** die Anzahl von Kettenelementen (22) in der Reliefbindung (27) auf die Hälfte reduziert ist, sodass sich neben einem Kettenelement (22) ein Leerraum (23) befindet.

5. Webstoffprodukt (1) nach Anspruch 3, **dadurch gekennzeichnet, dass** Kettenelemente (22) in Befestigungsbereichen (28) so gewebt sind, dass ein Leerraum (23) anstelle eines Kettenelements (22) bei 7 von 10 Positionen bis 2 von 10 Positionen vorhanden ist.

6. Webstoffprodukt (1) nach Anspruch 1, **dadurch gekennzeichnet, dass** ein oder mehrere Leerräume (23) auf die Öffnungen (31) der Verstärkungsschicht (3) ausgerichtet sind.

7. Webstoffprodukt (1) nach Anspruch 1, **dadurch gekennzeichnet, dass** die Anzahl der Leerraum (23)-Muster der Anzahl der Öffnungs (31)-Reihen in Schussrichtung (y) entspricht.

8. Webstoffprodukt (1) nach Anspruch 1, **dadurch gekennzeichnet, dass** der Bahnenstoff einen oder mehrere reliefgewobene Befestigungsbereiche (28) aufweist, wobei vorzugsweise reliefgewobene Befestigungsbereiche (28) auf beiden Randflächen (20) des Bahnenstoffs und optional ein oder mehrere reliefgewobene Befestigungsbereiche (28) im Mittelbereich vorhanden sind.

9. Webstoffprodukt (1) nach Anspruch 1, **dadurch gekennzeichnet, dass** die Folienschicht (4) auf beide Seiten der Bahnenschicht (2) laminiert ist.

10. Webstoffprodukt (1) nach Anspruch 1 oder 9, **dadurch gekennzeichnet, dass** die Folienschicht (4) auf die Bahnenschicht (2) gespritzt und laminiert wird, um eine undurchlässige Struktur zu bilden.

11. Webstoffprodukt (1) nach Anspruch 1, **dadurch gekennzeichnet, dass** die Bindung der Verstärkungsschicht (3) von der Grundbindung (24) verschieden ist, wobei die Bindung der Verstärkungsschicht (3) vorzugsweise dichter ist als die Grundbindung (24).

12. Webstoffprodukt (1) nach Anspruch 1, **dadurch gekennzeichnet, dass** die Dicke der Verstärkungsschicht (3) von der Bahnenschicht (2) verschieden ist, wobei die Verstärkungsschicht (3) vorzugsweise dicker als die Bahnenschicht (2) ist.

13. Webstoffprodukt (1) nach Anspruch 1, **dadurch gekennzeichnet, dass** die Öffnungen (31) der Verstärkungsschicht (3) abschließend mit Wärme behandelt werden, um zu verhindern, dass sich bei Gebrauch ein Riss an der Öffnung (31) zu bilden beginnt.

14. Webstoffprodukt (1) nach Anspruch 1, **dadurch gekennzeichnet, dass** eine Struktur an der Öffnung (31) undurchlässig ist.

## Revendications

1. Produit d'étoffe tissée (1), comprenant
- une couche de feuille (2), une pluralité d'éléments de trame en forme de bandes (21) et d'éléments de chaîne (22) étant tissés ensemble pour former une feuille d'étoffe,
- une couche de renfort (3) qui est une bande tissée comportant des orifices (31) pour fixer le produit (1) en cours d'utilisation,
- la couche de renfort (3) étant laminée sur au moins une face de la feuille d'étoffe (2),
- au moins une couche de film (4) laminée sur la couche de feuille (2),
**caractérisé en ce que**
la feuille d'étoffe comprend au moins deux types de tissages différents,
- un tissage basique (24) pour une zone principale de feuille d'étoffe (25) comportant un nombre sensiblement égal d'éléments de trame (21) et d'éléments de chaîne (22) tissés orthogonalement, et
- un tissage en relief (27) pour former une zone de fixation (28) où le nombre d'éléments de chaîne (22) par unité de largeur est réduit comparativement au nombre d'éléments au nombre d'éléments de trame (21),
et que les orifices (31) de la couche de renfort (3) sont alignés avec le tissage en relief (27).

2. Produit d'étoffe tissée (1) selon la revendication 1, **caractérisé en ce que** les éléments de trame (21) du tissage en relief (27) sont continus depuis le tissage basique (24) jusqu'au tissage en relief (27)

3. Produit d'étoffe tissée (1) selon la revendication 1, **caractérisé en ce qu'**un certain nombre d'éléments de chaîne (22) du tissage en relief (27) est réduit à un nombre compris entre 3/10 et 8/10 comparativement au nombre d'éléments de trame (21).

4. Produit d'étoffe tissée (1) selon la revendication 3, **caractérisé en ce que** le nombre d'éléments de chaîne (22) dans le tissage en relief (27) est réduit de moitié et qu'il y a donc un espace vide (23) à proximité d'un élément de chaîne (22).

5. Produit d'étoffe tissée (1) selon la revendication 3, **caractérisé en ce que** les éléments de chaîne (22) sont tissés dans des zones de fixation (28), de sorte qu'il y a un espace vide (23) au lieu d'un élément de chaîne (22) sur 7 positions sur 10 à 2 positions sur 10.

6. Produit d'étoffe tissée (1) selon la revendication 1, **caractérisé en ce qu'**un ou plusieurs espaces vides (23) sont alignés avec les orifices (31) de la couche de renfort (3).

7. Produit d'étoffe tissée (1) selon la revendication 1, **caractérisé en ce que** le nombre de motifs à espaces vides (23) correspond au nombre de rangées d'orifices (31) dans le sens de la trame (y).

8. Produit d'étoffe tissée (1) selon la revendication 1, **caractérisé en ce que** la feuille de tissu comprend une ou plusieurs zones de fixation tissées en relief (28), sachant qu'il y a de préférence des zones de fixation tissées en relief (28) sur les deux zones périphériques (20) de la feuille d'étoffe et en option une ou plusieurs zones de fixation tissées en relief (28) dans la zone centrale.

9. Produit d'étoffe tissée (1) selon la revendication 1, **caractérisé en ce que** la couche de film (4) est laminée sur les deux faces de la couche de feuille (2).

10. Produit d'étoffe tissée (1) selon la revendication 1 ou 9, **caractérisé en ce que** la couche de film (4) est revêtue par extrusion et laminée sur la couche de feuille (2) pour former une structure imperméable.

11. Produit d'étoffe tissée (1) selon la revendication 1, **caractérisé en ce que** le tissage de la couche de renfort (3) est différent du tissage basique (24), le tissage de la couche de renfort (3) étant de préférence plus dense que celui de la couche basique (24).

12. Produit d'étoffe tissée (1) selon la revendication 1, **caractérisé en ce que** l'épaisseur de la couche de renfort (3) est différente de celle de la couche de feuille (2), la couche de renfort (3) étant de préférence plus épaisse que la couche de feuille (2).

13. Produit d'étoffe tissée (1) selon la revendication 1, **caractérisé en ce que** les orifices (31) de la couche de renfort (3) sont finis thermiquement pour restreindre un début de déchirement depuis l'orifice (31) en cours d'utilisation.

14. Produit d'étoffe tissée (1) selon la revendication 1, **caractérisé en ce qu'**une structure située au niveau de l'orifice (31) est imperméable.
